Europäisches Patentamt

European Patent Office

Office européen des brevets

(11) Veröffentlichungsnummer: **0 324 461**
**A1**

## (12) EUROPÄISCHE PATENTANMELDUNG

(21) Anmeldenummer: **89100438.4**

(51) Int. Cl.4: **F16L 59/02**

(22) Anmeldetag: **11.01.89**

(30) Priorität: **12.01.88 DE 3800646**

(43) Veröffentlichungstag der Anmeldung:
**19.07.89 Patentblatt 89/29**

(84) Benannte Vertragsstaaten:
**AT BE CH DE ES FR IT LI LU NL**

(71) Anmelder: **E. Missel GmbH & Co.**
**Hortensienweg 27**
**D-7000 Stuttgart 50(DE)**

(72) Erfinder: **Schäfer, Wolfgang**
**Endersbacherstrasse 51**
**D-7000 Stuttgart 50(DE)**

(74) Vertreter: **Dipl.-Phys.Dr. Manitz Dipl.-Ing.**
**Finsterwald Dipl.-Ing. Grämkow**
**Dipl.-Chem.Dr. Heyn Dipl.-Phys. Rotermund**
**Morgan, B.Sc.(Phys)**
**Seelbergstrasse 23/25**
**D-7000 Stuttgart 50(DE)**

(54) **Schlauchförmige Dämmung.**

(57) Es wird eine schlauchförmige Dämmung aus Schaumstoff für im Fußbodenbereich verlegte Rohrleitungen beschrieben, die sich durch die Ermöglichung eines innigen und formschlüssigen Anschlusses an die seitliche Wärme- und Trittschalldämmung auszeichnet und eine Außenkontur in Rechteck- oder Quadratform besitzt.

Fig. 1

EP 0 324 461 A1

## Schlauchförmige Dämmung

Die Erfindung betrifft eine schlauchförmige Dämmung, insbesondere für im Fußbodenbereich verlegte Rohrleitungen.

Nach den Bestimmungen der Heizanlagenverordnung sind im Bereich warmgehender Trinkwasseranschlußleitungen und Verteilleitungen bis zu einer Länge von 8 m Dämmdicken von 13 mm vorgeschrieben (bei $\lambda$ = 0,04 Wm/˙K bei 40˙).

Warmwasserleitungen, die ganzjährig betrieben und insbesondere auch im Fußbodenbereich verlegt werden, erfordern eine die Leitungen gleichmäßig umschließende Wärmedämmung, um eine unerwünschte Wärmeabgabe an die Umgebung, insbesondere auch während des Sommerbetriebs, zu vermeiden.

Insbesondere im Fußbodenaufbau führt jedoch die Verwendung der üblichen, im Querschnitt runden Dämmungen für die Rohrleitungen zu erheblichen Schwierigkeiten, da das Erreichen eines innigen Anschlusses der Rohrdämmung an die seitliche Wärme- und Trittschalldämmung nicht sicher gestellt werden kann und demgemäß häufig Schallbrücken entstehen, die wiederum Schadenersatzansprüche der Bauherren zur Folge haben können.

Ferner ist von erheblichem Nachteil, daß beim Einsatz der bekannten Dämmaterialien die Forderungen der sich auf Estriche im Bauwesen beziehenden DIN 18560 nicht erfüllt werden können, da die von dieser Bestimmung geforderte ebene Oberfläche zur Aufnahme des Estrichs nicht gegeben ist.

Aufgabe der Erfindung ist es daher, eine wirtschaftlich zu fertigende, sämtliche Forderungen der Heizanlagenverordnung erfüllende schlauchförmige Dämmung zu schaffen, die es gestattet, sowohl eine einwandfreie Wärme- und Trittschalldämmung zu gewährleisten, als auch die Forderung nach einer ebenen Oberfläche zur Aufnahme des Estrichs zu erfüllen.

Gelöst wird diese Aufgabe nach der Erfindung im wesentlichen dadurch, daß die Außenkontur der Dämmung zumindest im wesentlichen Rechteckform oder Quadratform besitzt, wobei die Rohraufnahmeöffnung im Querschnitt rund oder zumindest im wesentlichen quadratisch sein kann.

Durch diese im Vergleich zu herkömmlichen Dämmaterialien ungewöhnliche Formgebung wird allseitig ein einwandfreier Anschluß an benachbarte Flächen und Materialien sichergestellt, ohne dabei irgendwelche Nachteile hinsichtlich der Dämmwirkung in Kauf nehmen zu müssen, da die geforderte Außenkontur unabhängig von der jeweils gewünschten Dämmdicke realisierbar ist.

Von besonderem Vorteil ist dabei, daß sich die erfindungsgemäße Außenkontur der schlauchförmigen Dämmung auf wirtschaftliche Weise realisieren läßt, und zwar sowohl im Rahmen eines Extrusionsvorgangs als auch insbesondere durch einen mehrteiligen Aufbau aus streifenförmigen Materialien.

Durch Kombination des in vielen Fällen den Hauptbestandteil der Dämmung bildenden Schaumstoffmaterials mit faserförmigen Dämmstoffmaterialien und/oder Folienmaterialien, insbesondere in gitterverstärkter Ausführung, läßt sich jeweils eine den gegebenen Anforderungen in vollem Umfange entsprechende Dämmung herstellen, die hinsichtlich Festigkeit, Feuchtigkeitsundurchlässigkeit und Verbindbarkeit mit Anschlußmaterialien optimale Eigenschaften aufweist.

Besonders vorteilhafte Ausgestaltungen der schlauchförmigen Dämmung nach der Erfindung sind in den Unteransprüchen angeführt.

Ausführungsbeispiele der Erfindung werden nachfolgend unter Bezugnahme auf die Zeichnung erläutert; in der Zeichnung zeigt:

Fig. 1 eine erste Ausführungsform einer einteiligen schlauchförmigen Dämmung im Querschnitt,

Fig. 2 eine schematische Querschnittsansicht einer aus zwei Schaumstoffteilen aufgebauten Dämmung nach der Erfindung,

Fig. 3 eine schematische Querschnittsansicht einer aus vier streifenförmigen Teilen bestehenden Dämmung nach der Erfindung,

Fig. 4 eine schematische Darstellung eines Kerbrinnen aufweisenden Schaumstoff-Plattenmaterials, und

Fig. 5 eine aus dem gekerbten Plattenmaterial nach Fig. 4 gefertigte Dämmung nach der Erfindung.

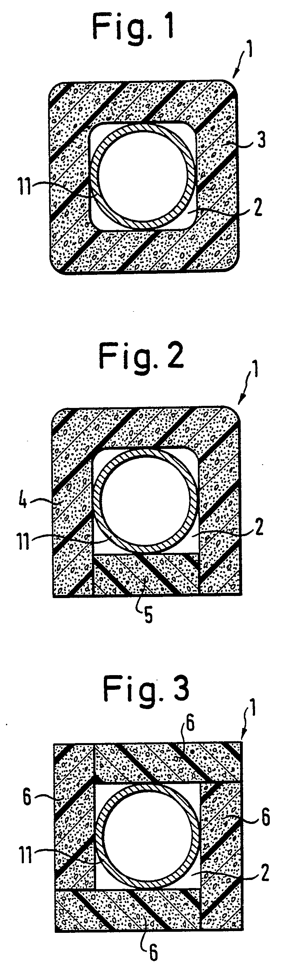

Die Querschnittsansicht nach Fig. 1 zeigt in schematischer Weise eine aus Schaumstoff bestehende, eine quadratische Außenkontur besitzende Dämmung 1, welche aus einem extrudierten und damit einteiligen Formschlauch 3 von vorgegebener und entsprechend den Dämmanforderungen dimensionierter Wandstärke besteht.

In dieser extrudierten Dämmung 1 ist mittig eine im Querschnitt etwa quadratische Öffnung 2 zur Aufnahme des zu dämmenden Rohres 11 vorgesehen, aber diese Aufnahmeöffnung kann auch im Querschnitt rund ausgebildet sein.

Fig. 2 zeigt eine Ausführungsvariante, bei der die rechteckige bzw. quadratische Außenkontur der Dämmung 1 dadurch erreicht wird, daß ein Schaumstoffstreifen 4 etwa U-förmig verformt und mit den Schenkeln dieses U-förmigen Teils ein ebener Schaumstoffstreifen 5 fest verbunden, insbesondere verklebt oder verschweißt wird, der vorzugsweise gleiche Dämmdicke wie das U-förmige Teil 4 besitzt. Dieser ebene Streifen 5 kann zwischen den beiden Schenkeln oder bei entsprechender Dimensionierung dieser Schenkel auch an den Schenkelstirnseiten befestigt werden. Die Rohraufnahmeöffnung ist dabei wiederum im wesentlichen quadratisch und gestattet eine problemfreie Aufnahme des Rohres 11.

Fig. 3 zeigt eine Ausführungsvariante, bei der die Dämmung 1 aus vier gleich breiten Plattenstreifen 6 gleicher Dämmdicke gebildet ist, welche stumpf miteinander verbunden sind, so daß sich eine quadratische Außenkontur und in entsprechender Weise eine quadratische Aufnahmeöffnung 2 für das Rohr 11 ergibt.

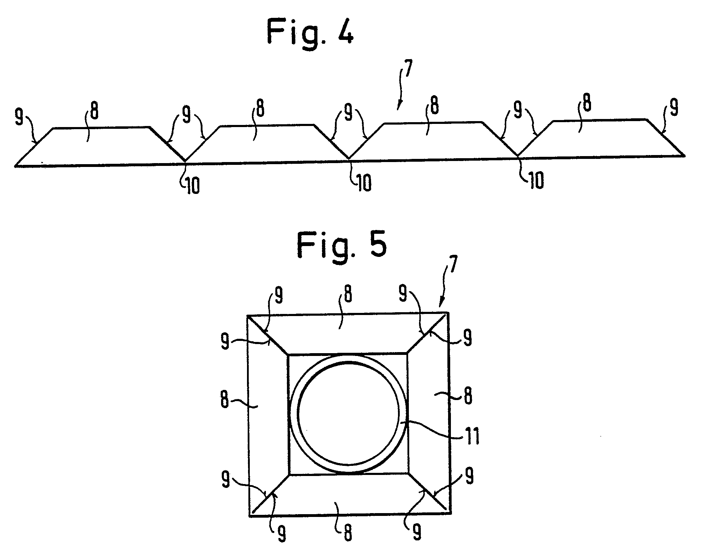

Fig. 4 zeigt ein Schaumstoff-Plattenmaterial 7, das im Abstand der Länge der Außenseiten der im Querschnitt quadratischen Dämmung unter 45° angefräst ist, so daß vier gleiche Abschnitte 8 entstehen, die unter 45° verlaufende Seitenwände 9 besitzen, so daß ein Zusammenfalten dieses langgestreckten Plattenmaterials 7 zu einem im Querschnitt quadratischen Dämmschlauch - wie er in Fig. 5 gezeigt ist - problemfrei erfolgen kann. Die Einfräsungen sind dabei nur so tief gewählt, daß der Zusammenhalt zwischen den einzelnen Streifen 8 erhalten bleibt und nach erfolgtem Falten nur ein Verschweißen bzw. Verkleben des Dämmaterials an der Verschlußseite erforderlich ist.

Bei allen Ausführungsvarianten der Erfindung ist es möglich und von Vorteil, eine Außenummantelung in Form einer Beschichtung oder zumindest einer Folie sowie ggf. weiterer Zwischenschichten vorzusehen.

Insbesondere bei einem mehrschichtigen Aufbau unter Verwendung von spezielle Funktionen übernehmenden Schichten ist der mehrteilige Aufbau von besonderem Vorteil, weil der Schichtaufbau bei noch ebenen Materialien erfolgen kann und die Überführung in die eine rechteckige Außenkontur besitzende Endform praktisch unabhängig von dem Mehrschichtaufbau erfolgen kann.

Allen Ausführungsvarianten gemeinsam ist der Vorteil, daß unabhängig von der jeweils gewünschten bzw. geforderten Dämmdicke ein inniger und formschlüssiger Anschluß an benachbarte Bauteile, insbesondere an die benachbarte Wärme- und Trittschalldämmung erreicht wird, und auf diese Weise problemfrei allen bestehenden Forderungen optimal Rechnung getragen werden kann, so daß der Einsatz des erfindungsgemäß ausgebildeten Dämmaterials generell zu einer Verbesserung der Bauqualität und damit zu einer Beseitigung des bisher vorhandenen Häftungsrisikos der Bauhandwerker beiträgt.

## Ansprüche

1. Schlauchförmige Dämmung, insbesondere für im Fußbodenbereich verlegte Rohrleitungen, dadurch **gekennzeichnet**, daß die Außenkontur der Dämmung (1) zumindest im wesentlichen Rechteckform oder Quadratform besitzt.

2. Schlauchförmige Dämmung nach Anspruch 1, dadurch **gekennzeichnet**, daß die Rohraufnahmeöffnung (2) im Querschnitt zumindest im wesentlichen quadratisch oder rund ist.

3. Schlauchförmige Dämmung nach einem oder mehreren der vorhergehenden Ansprüche, dadurch **gekennzeichnet**, daß der den Hauptbestandteil der Dämmung bildende Schaumstoff aus einem extrudierten Formschlauch (3) mit recht eckigem Querschnitt und eckiger oder runder Rohraufnahmeöffnung (2) besteht.

4. Schlauchförmige Dämmung nach einem oder mehreren der vorhergehenden Ansprüche dadurch **gekennzeichnet**, daß der den Hauptbestandteil der Dämmung bildende Schaumstoff in Form von zumindest zwei Teilen zu einem umfangsmäßig geschlossenen Rechteckschlauch zusammengefügt ist.

5. Schlauchförmige Dämmung nach Anspruch 4, dadurch **gekennzeichnet**, daß der Schaumstoff aus einem im Querschnitt im wesentlichen U-förmigen Rohrumschließungsteil (4) und einem mit den Schenkeln dieses Rohrumschließungsteils (4) verbundenen Verschlußstreifen (5) besteht, der zwischen den beiden Schenkeln des Rohrumschließungsteils (4) gelegen ist.

6. Schlauchförmige Dämmung nach einem oder mehreren der vorhergehenden Ansprüche, dadurch **gekennzeichnet**, daß der Schaumstoffkörper aus vier gleiche Breite besitzenden und insbesondere auch gleiche Dämmdicke aufweisenden Schaumstoffstreifen (6) besteht, die jeweils stumpf miteinander verbunden sind.

7. Schlauchförmige Dämmung nach einem oder mehreren der vorhergehenden Ansprüche, dadurch **gekennzeichnet**, daß der im Querschnitt rechteckige Schaumstoffkörper aus einem langgestreckten plattenförmigen Material (7) gefaltet ist, das aus vier, unter 45° verlaufende Seitenwände (9) aufweisenden und miteinander zusammenhängenden Streifen (8) besteht.

8. Schlauchförmige Dämmung nach Anspruch 7, dadurch **gekennzeichnet**,

daß die unter 45° verlaufenden Seitenwände (9) der Streifen (8) durch Einfräsungen in das Plattenmaterial (7) gebildet sind, wobei die Tiefe dieser Einfräsungen etwas geringer ist als die Stärke des Plattenmaterials.

9. Schlauchförmige Dämmung nach Anspruch 7 oder 8,
dadurch **gekennzeichnet,**
daß die schräg verlaufenden Seitenwände (9) nur an der Verschlußstelle miteinander verklebt oder verschweißt sind.

10. Schlauchförmige Dämmung nach einem oder mehreren der vorhergehenden Ansprüche,
dadurch **gekennzeichnet,**
daß der den Hauptbestandteil der Dämmung bildende Schaumstoff aus zwei mit einer insbesondere halbrunden, durch Ausfräsung oder bei der Extrusion hergestellten Ausnehmung versehenen Streifen zusammengefügt ist.

11. Schlauchförmige Dämmung nach einem oder mehreren der vorhergehenden Ansprüche,
dadurch **gekennzeichnet,**
daß der rechteckige oder quadratische Schaumstoffkörper mit einer als Schutzschicht und/oder Feuchtigkeitssperre und/oder Dampfsperre wirkenden Außenbeschichtung versehen ist, die aus einer Metallfolie, einer hochverdichteten Kunststoffolie oder einer metallbedampften Folie besteht.

12. Schlauchförmige Dämmung nach einem oder mehreren der vorhergehenden Ansprüche,
dadurch **gekennzeichnet,**
daß der rechteckige oder quadratische Schaumstoffkörper von einer mit dem Schaumstoff fest verbundenen Gitterfolie oder von einer Schicht aus Fasermaterial und einer diese umschließenden Folie umschlossen ist.

## Fig. 1

## Fig. 2

## Fig. 3

# Fig. 4

# Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 000 845 (R. KEINERT) <br> * Insgesamt * <br> --- | 1,2,4, 10 | F 16 L 59/02 |
| X <br><br> A | WO-A-8 302 491 (F. PEDERSEN) <br> * Zusammenfassung; Figur 5 * <br><br> --- | 1,2 <br><br> 3,4 | |
| X | DE-A-3 008 731 (G. FRIEDRICH) <br> * Seite 5, letzter Absatz – Seite 6; Figuren * <br> ----- | 1,2,4,5 ,11 | |

**RECHERCHIERTE SACHGEBIETE (Int. Cl.4)**

F 16 L

Der vorliegende Recherchenbericht wurde für alle Patentansprüche erstellt

| Recherchenort | Abschlußdatum der Recherche | Prüfer |
|---|---|---|
| DEN HAAG | 19-04-1989 | BARTSCH A.W. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
   Dokument